# EUROPEAN PATENT APPLICATION

(11) **EP 1 229 425 A1**
(43) Date of publication of application: **07.08.2002**
(21) Application number: 02001970.9
(22) Date of filing: 04.02.2002
(51) Int. Cl.: G06F 1/00

(54) **Content usage management system and content usage management method**

(30) Priority: 02.02.2001 JP 2001027278
(71) Applicant: MATSUSHITA ELECTRIC INDUSTRIAL CO., LTD., Kadoma-shi, Osaka 571-8501 (JP)
(72) Inventor: Higashi, Akio, Takatsuki-shi, Osaka 569-1022 (JP); Murakami, Hiroki, Suita-shi, Osaka 565-0862 (JP); Matsuo, Takashi, Kawasaki-shi, Kanagawa 216-0005 (JP); Nakahara, Tohru, Osaka-shi, Osaka 532-0022 (JP); Namba, Takaaki, Nagoya-shi, Aichi 452-0817 (JP); Goto, Yoshimasa, Moriguchi-shi, Osaka 570-0047 (JP); Nakanishi, Masanori, Osaka-shi, Osaka 531-0001 (JP); Miyazaki, Masaya, Ikeda-shi, Osaka 563-0022 (JP); Kozuka, Masayuki, Arcadia, CA 91007 (US)
(74) Representative: Balsters, Robert

(57) **Abstract**

A content usage management system 1 comprises a user terminal 200a using a content as a digital production and a server 100 managing usage of the content in the user terminal 200a over a communication network 300; wherein the sever 100 includes a user right information DB 120 that memorizes right information regarding a usage right of the content entitled to a user who uses the terminal 200a and a content information generation unit 170 that generates LT which is right information indicating a part of usage right entitled to the user based upon a request from the user and that sends the LT to the sever terminal 200a; and the user terminal 200a includes a communication unit that receives the LT sent from the server 100 and a license information processing unit 260 that controls usage of the content according to the usage right indicated on the received LT.

## Description

### BACKGROUND OF THE INVENTION

### (1) Field of the Invention

The present invention relates to a system and method which manage a digital content such as music and videos distributed via communications or broadcasting, and especially relates to a technique that is performed in a simple and assured manner to manage rights of the content and to control over the usage of the content such as to restrict the number of times to reproduce the content, etc.

### (2) Description of the Prior Art

In recent years, systems that distribute some digital productions such as music, videos and games via the Internet or digital broadcasting have been developed and a part of them is now in a phase for practical use. For distributing these contents, the methodology of right management and usage control (DRM: Digital Rights Management), which restricts the numbers of reproduction (play/playback), moving and copying for the distributed content, have also been examined from a viewpoint of copyrights protection, etc.

The conventional digital content distribution systems, as seen in the Japanese Laid-Open Patent Application Nos.2000-48076 and 2000-293439, have been modeled to distribute a usage rule of the content for each user together with the content itself to a recipient side to make everything be managed by a user terminal side.

For example, in case a user wants to purchase a right to see the movie "Matrix" three times, the user terminal receives the content of the movie together with its usage rule indicating, "Matrix can be viewed three times" via communication from a distribution server, and the reproduction of the content is under the management according to the rule.

Once the abovementioned rules are sent to the user terminal, the distribution server is no longer involved with the usage rule of the user.

When "Matrix" is viewed by reproducing the content stored at the user terminal, a process to reduce by one is executed for each view from the number of views allowed in the usage rules managed by the terminal. Then, a process is executed to prohibit any views when the number of views permitted becomes zero.

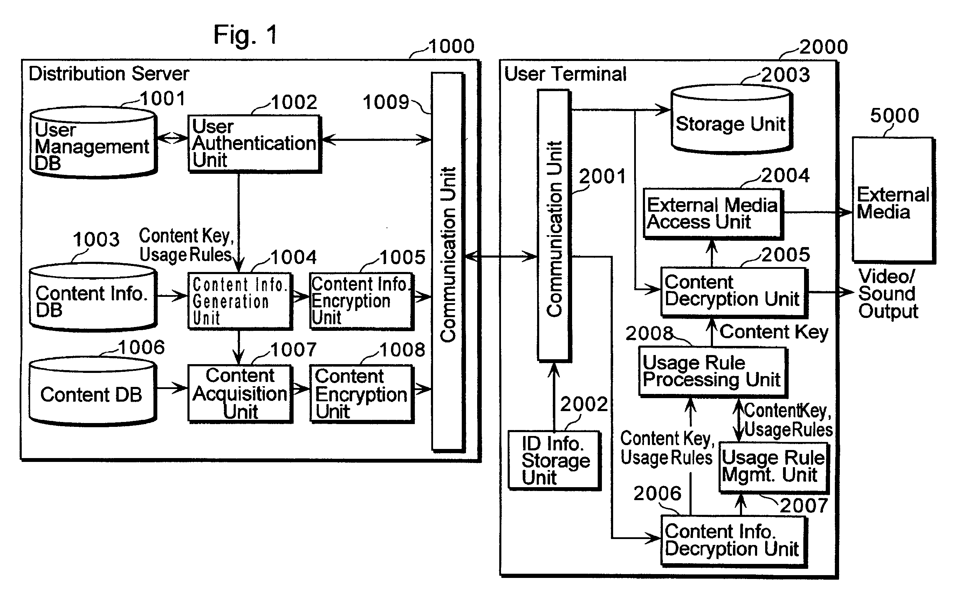

Fig. 1 shows a structure of the conventional digital content distribution system.

A distribution server 1000 is equipped with a user management database 1001 that stores ID information, etc. of the users registered as a member, a content information database 1003 that stores a content key to encrypt the content and usage rules of content, a content database 1006 that stores a content, a user authentication unit 1002 that executes user authentication, a content information generation unit 1004 that generates content information including usage rules of content and information of a content key, a content encryption unit 1005 that encrypts the content information by the user's unique information such as a user ID, etc., a content acquisition unit 1007 that acquires the content specified from the content database 1006, a content information encryption unit 1008 that encrypts the content with the content key and a communication unit 1009 that communicates with a user terminal 2000.

On the other hand, the user terminal 2000 is equipped with a communication unit 2001 that communicates with the distribution server 1000, an ID information storage unit 2002 that stores ID information, a storage unit 2003 (HDD) that stores the content encrypted, a content information decryption unit 2006 that decrypts the content key and usage rules from the content information received, a usage rule management unit 2007 that manages the usage rules and the content key of the content, a usage rule processing unit 2008 that processes the usage rules when the content is reproduced, a content decryption unit 2005 that decrypts the content by the content key acquired from the usage rule processing unit 2008 when the rules are met, and an external media access unit 2004 that outputs the content to an external media 5000.

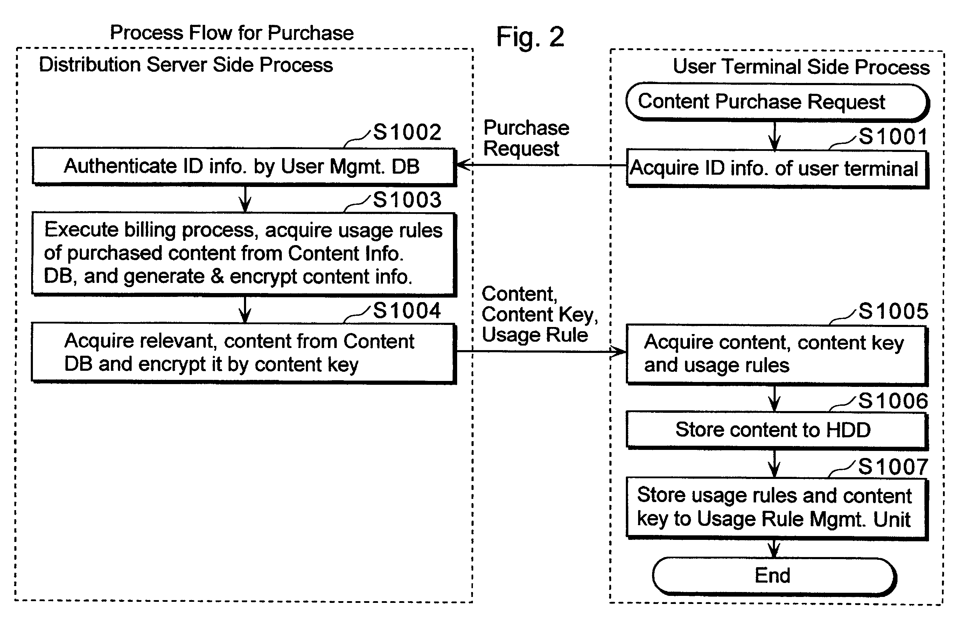

Fig. 2 shows a process flow for the case the user terminal 2000 purchases the content from the distribution server 1000 in this digital content distribution system.

When a user requests to purchase the content, the communication unit 2001 in the user terminal 2000 acquires ID information of the user terminal 2000 which is stored in the ID information storage unit 2002, and sends this ID information with the content purchase request to the distribution server 1000 (S1001).

The user authentication unit 1002 receiving this information through the communication unit 1009 on the distribution server 1000 collates it with the ID information stored in the user management database 1001 to execute user authentication, and then passes the content purchase request to the content information generation unit 1004 (S1002).

The content information generation unit 1004 executes a billing process for the content purchase, acquires the usage rule and the content key information of the purchased content from the content information database 1003, and then passes the content key with the information of the purchased content to the content acquisition unit 1007. Also, the content information including information of the usage rule and content key is generated and passed to the content information encryption unit 1005, and then the content information encryption unit 1005 encrypts the content information (S1003).

The content acquisition unit 1007 acquires the relevant content from the content database 1006, and the content encryption unit 1008 encrypts this content by the content key (S1004).

The communication unit 1009 on the distribution server 1000 sends the encrypted content and the encrypted content information to the user terminal 2000.

The communication unit 2001 in the user terminal 2000 receives the encrypted content and the encrypted content information including the content key and usage rule information (S1005), and sends the content to the storage unit 2003 to be stored (S1006).

The content information is also sent to the content information decryption unit 2006. The content information decryption unit 2006 decrypts the encrypted content information, takes out the content key and usage rule, and stores them in the usage rule management unit 2007 (S1007).

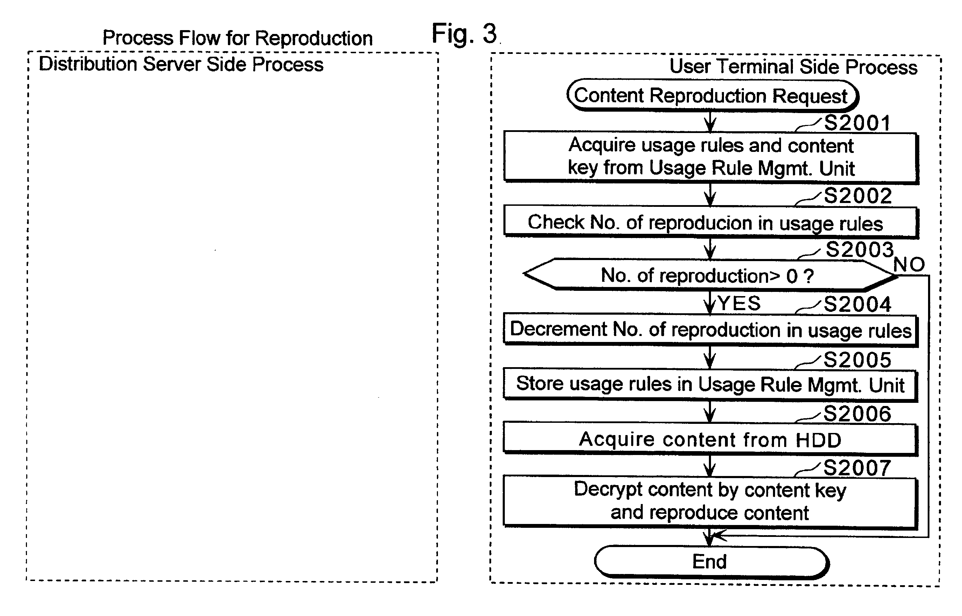

Fig. 3 shows a process flow for the case the user terminal 2000 reproduces the content in this digital content distribution system.

When the user requests to reproduce the content, the usage rule processing unit 2008 acquires the usage rules and content key for the relevant content being managed in the usage rule management unit 2007 (S2001) and checks the number of reproduction (how many times it allows to reproduce) in the usage rule (S2002).

If the number of reproduction is bigger than zero (S2003), the number of reproduction in the usage rule is decremented (S2004) and the usage rule and the content key are stored in the usage rule management unit 2007 (S2005).

The content decryption unit 2005 acquires the relevant content from the storage unit 2003 (S2006), decrypts the content by the content key provided from the usage rule processing unit 2008, and reproduces the content (S2007).

When the number of reproduction is not bigger than 0 in Step S2003, it terminates the reproduction process.

The image/sound reproduced in the content are output from the content decryption unit 2005. Also, if the content is moved out or copied to the external media 5000, the image/sound of the content are output to the external media 5000 via the external media access unit 2004.

In order to avoid any leaks of confidential information, the ID information storage unit 2002, the content information decryption unit 2006 and the usage rule management unit 2007 that handle the confidential information are generally realized in a security module such as an IC card, and this security module is loaded to the user terminal 2000.

In this case, when the information of the usage rule and content key is transferred to the usage rule processing unit 2008 from the usage rule management unit 2007, these information is encrypted and output from the security module. Then, the usage rule processing unit 2008 decrypts these information to use. In addition, when the usage rule updated by the usage rule processing unit 2008 is stored in the usage rule management unit 2007, it is encrypted once again for sending out to the security module.

In the conventional digital content distribution system, the usage rule of the content for each user is managed in such a way by the user terminal side.

However, when the usage rules for each user are managed at the user terminal, there are problems as follow.
(1) A complex management scheme of the usage rule is necessary for the user terminal so that it may require having high loaded functions on the user terminal.
(2) Since the distribution server is not involved with any usage and right management processes for the distributed content at all, it is unable to track the content and detect when the content has been copied to what media even if the content is copied or the like happens on the user terminal.
(3) When the storage mechanism (HDD) in the user terminal is crashed, it is difficult to restore the usage rule, etc. (Because there is no means other than the user terminal to maintain the information.)
(4) For those cases to perform service such as to make the number of reproduction +1 automatically in the usage rule for a previously purchased content if any new content is purchased, or to add a new usage rule, etc., it becomes necessary to change both hardware and software on the distribution server and user terminal. Therefore, it is actually difficult to perform the processes for such service to expand some usage rule or to add a new rule.
   Additionally, it may also be possible to consider a model, which makes all of each user's usage rule be managed at the distribution server side, and makes the user terminal, without having any control over the usage rule, acquire the content itself (or possibly the content key only if the content is encrypted) from the distribution server via communication each time it is viewed. However, in such a case, there is a problem as follows.
(5) Since there is no control over the use of the content after the content has been handed over to the user terminal, the user terminal can use the content without any limitation (especially, reproduction).

### SUMMARY OF THE INVENTION

The present invention is available to solve these conventional problems, aiming at providing a content usage management system and content management methods, etc. that make the server control usage of a content in a user terminal in a simple and assured manner without giving any extra loads of process onto the user terminal.

In order to achieve abovementioned object, the content usage management system related to the present invention includes a terminal device that uses a content as a digital production, and a server device that manages usage of the content on the terminal device via a transmission line, wherein the server device includes a right information memory unit operable to memorize right information related to a usage right of the content entitled to a user who uses the terminal device, and a license ticket issuance unit operable to generate a license ticket based on a request from a user as right information that indicates a part of the usage right entitled to the user and to send the license ticket to the terminal device; and the terminal device includes a receiving unit operable to receive the license ticket sent from the server device, and a content usage control unit operable to control usage of the content according to the usage right indicated on the received license ticket.

In this specification, "usage (use)" of a content includes all operations for using the content such as "reproduction (play)", "moving", "copying" of the content, "printing" of the content for an electronic book, and even further includes pre-actions for these operations such as downloading of "license information" (i.e. to download a license ticket in advance).

In the content usage management system composed in such a way, the license ticket issuance unit generates the license ticket as right information indicating a part of the usage right entitled to the user and sends the license ticket to the terminal device. Also, the content usage control unit in the terminal device controls the usage of the content according to the usage right indicated on the received license ticket.

Therefore, it is not necessary for the terminal device to manage the entire usage right entitled to the user, and usage of the content can be controlled just by managing a part of the usage right entitled to the user that is shown on the license ticket, and thereby remarkably reduces a load of process required for the management by the terminal device. Additionally, the server device can grasp a status of content usage on each terminal in accordance with the license ticket issuance. When the content is copied at the terminal device, it is possible, by making a query to the server device for a copying permission, to detect when the copy was taken to what medium and to keep track of the content. Also, because the server device holds the usage right entitled to the user, it is easy to restore usage rules, etc. of the user when a storage unit (HDD) on the terminal device is crashed. It also makes it easy to execute a process for adding some extra usage rule or for providing some service to expand a usage rule, for example, adding 1 to the number of reproduction in the usage rule of the content. Furthermore, since the content usage control unit on the terminal device controls usage of the content according to a usage right indicated on the received license ticket, it assures to prevent the content from being used unlimitedly by the terminal device.

Herein the license ticket issuance unit acquires a request from the user that specifies a part of the usage right entitled to the user, generates a license ticket corresponding to the request, and sends the license ticket to the terminal device. It can also be featured to generate a license ticket that indicates a minimum unit of a usage right included in the usage right entitled to the user, and to send the license ticket to the terminal device. In such a structure, it is possible to grasp a status of usage for the content on each terminal device in a detailed level, and to minimize the load of process required for managing the usage right on the each terminal device.

In addition, the license ticket may be in a structure that includes detective information to detect whether any detail of the license ticket has been altered. Because of this, it ensures to prevent any alterations on the license ticket.

The present invention is not only realized as above content usage system, but also realized as a server device and as a terminal device, which composes the system. The invention may also be realized as a content usage management method using characteristic means that realize the server device and the terminal device as program steps. Additionally, it may be realized even as a program that makes a personal computer, etc. to execute these steps. It may be unnecessary to mention, but the program can be distributed extensively via transmission media such as the Internet, recordable media (e.g. DVD) and so on.

### BRIEF DESCRIPTION OF THE DRAWINGS

These and other objects, advantages and features of the invention will become apparent from the following description thereof taken in conjunction with the accompanying drawings that illustrate a specific embodiment of the invention. In the Drawings:
Fig.1 is a block diagram that shows a structure of the conventional digital content distribution system.
Fig. 2 is a flow chart that shows the process when content is purchased in the conventional digital content distribution system.
Fig. 3 is a flow chart that shows the process when content is reproduced in the conventional digital content distribution system.
Fig. 4 is a diagram that shows an overall structure of the content usage management system 1 related to the present embodiment.
Fig. 5 is a functional block diagram that shows structures of the server 100 and the user terminals 200a∼200c described in Fig. 4.
Fig. 6 is a diagram that shows a structure sample of the user management table 111 described in Fig. 5.
Fig. 7 is a diagram that shows a structure sample of the user right information management table 121 described in Fig. 5.
Fig. 8 is a diagram that shows a structure sample of the license information described in Fig. 5.
Fig. 9 is a diagram that shows a LT data form structure generated by the content information generation unit 170.
Fig. 10 is a flow chart that shows a process respectively executed on the user terminal 200a and server 100 when the user purchases the content through this system.
Fig. 11 is a diagram that shows a content purchase screen (1).
Fig. 12 is a diagram that shows a content purchase screen (2).
Fig. 13 is a flow chart that shows a process respectively executed on the user terminal 200a and server 100 when the user utilizes the content in this system.
Fig. 14 is a diagram that shows a using content selection screen.
Fig. 15 is a diagram that shows a content usage request screen.
Fig. 16 is a diagram that shows a relationship between the usage rules extracted and distributed to the user terminal and fluctuations in the usage rules managed by the server.
Fig. 17 is a diagram that shows a relationship between the usage rule permitting to use once and its usage duration.
Fig. 18 is a flow chart that shows a process executed by the user terminal 200a for a case the content or LT is moved out to some external media in this system.
Fig. 19 is a diagram that shows a moving content selection screen.

### DESCRIPTION OF THE PREFERRED EMBODIMENTS

The following is a detailed explanation of embodiments for the present invention with reference to figures.

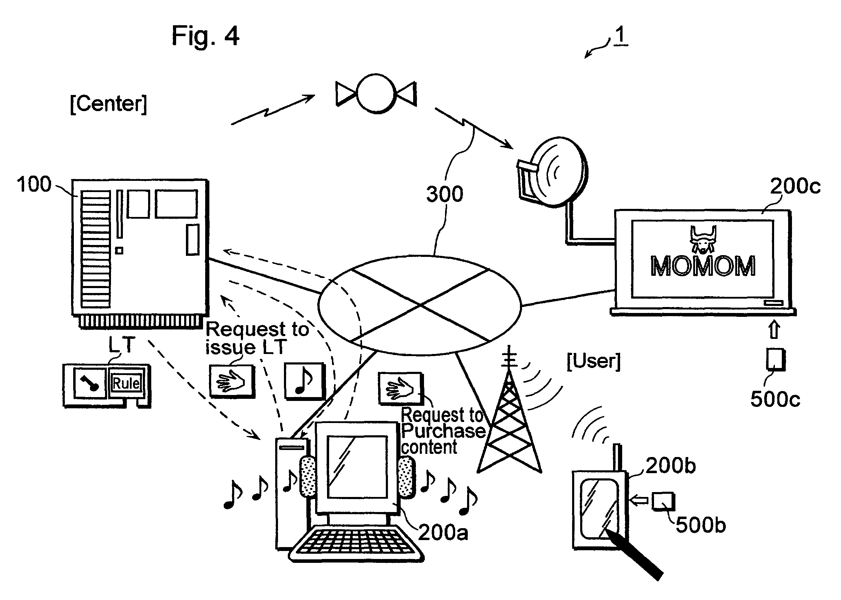

Fig. 4 is a diagram that shows an overall structure of the content usage management system 1 related to this embodiment.

In this content usage management system 1, usage rights (license) for each content, which are assigned to a user who purchases the digitized content such as music, videos and books, are managed mainly at a center side in a dynamic way, and a license ticket (hereinafter also referred to as "LT") is distributed based upon a request from the user which makes the content available to use within a scope of usage rules included in the LT, so as to protect copyrights of the content by the system. The system includes a server 100 located at a center, user terminals 200a to 200c of the users who use the content and a communication network 300 that connects these elements.

The server 100 is a computer such as a workstation and functions as a user management server, content distribution server, billing server, and license management server. To be more specific, the server 100 manages the user who joins to this system 1 and the terminal owned by him, accepts any purchase of the content from the user terminals 200a to 200c, holds a web page that accepts any requests to issue a license ticket (hereinafter also referred to as "LT issuance request") from the user terminals 200a to 200c, etc., bills based upon the content purchase request coming from the user terminals 200a to 200c, distributes the encrypted content to the user terminals 200a to 200c and also distributes LT to use the encrypted content at the user terminals 200a to 200c according to the LT issuance request. This LT includes a content key to decrypt the encrypted content and the extracted usage rules taken out partially from the usage rights (license) for the content granted to the user.

The user terminals 200a to 200c are the computer device such as a personal computer, mobile information terminal, digital television receiver and functions as a client for the server 100. Specifically, the user terminals 200a to 200c access the web page on the server 100 according to the user's operation by using tools such as the Internet browser software, send the content purchase request and receive the content distributed, send the LT issuance request for using the content and receive the LT, and reproduce the content within a scope of the extracted usage rules on LT.

It is possible to attach an external media 500b for the user terminal 200b (for example, an SD card) and an external media 500c for the user terminal 200c (for example, an IC card) to the user terminal 200a, and is structured to be capable of copying and moving the content and LT held by the user terminal 200a to the external media 500b and 500c, and reproducing the content on the user terminals 200b and 200c.

The communication network 300 is the communication media provide by some wire communications such as the Internet and CATV and wireless communications such as digital broadcasting.

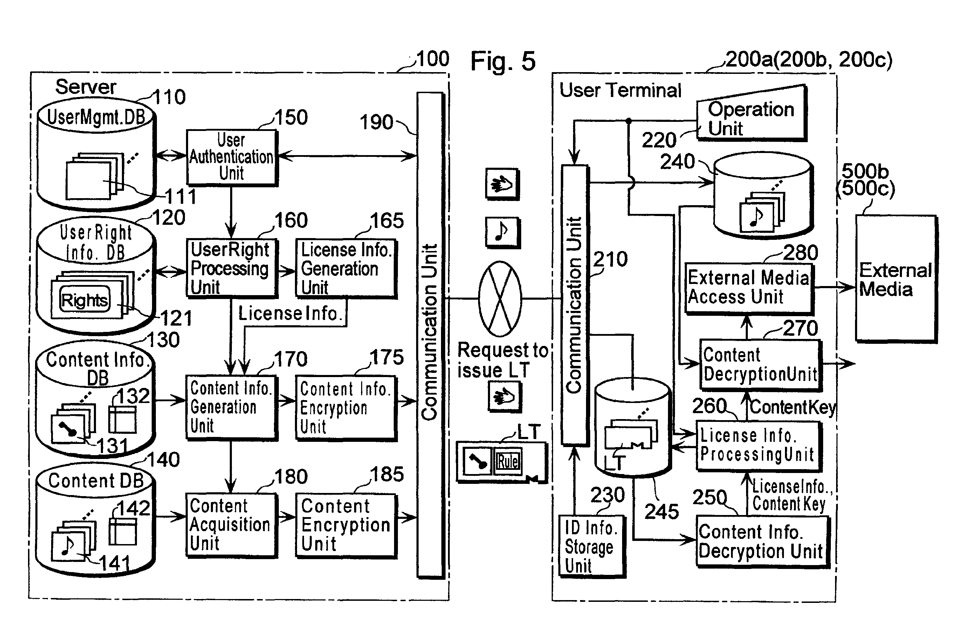

Fig. 5 is a functional block diagram that indicates structures of the server 100 and user terminals 200a to 200c shown in Fig. 4. Since the functional structure in the user terminals 200a to 200c is identical, the user terminal 200a represents all in the figure. The communication network 300 is also shown in the figure.

The server 100 is roughly comprised of a data unit (a user management DB 110, user right information DB 120, content information DB 130, and content DB 140) which is realized by the data file, etc. stored in the hard disk, etc., a processing unit (a user authentication unit 150, user right processing unit 160, license information generation unit 165, content information generation unit 170, content information encryption unit 175, content acquisition unit 180, content encryption unit 185, and communication unit 190) which is realized by the hardware such as CPU, RAM, ROM, etc., and the program, etc. executed from CPU.

The user management DB 110 stores the user information, etc. of the user registered as a member to this content usage management system 1. To be more specific, in order to put the user rights under its management, the user management DB 110 uses an unique client ID (terminal ID) assigned by the user terminal to associate the rights to the user information including the user ID. It is a memory unit to memorize multiple user management tables 111 to register and manage the client ID of the user terminal owned by the user who has registered as a member, the unique ID information assigned to the user and the user information of the user.

The user right information DB 120 stores the user right (license) information for the content. To be specific, the user right information DB 120 is a memory unit to memorize multiple user right information management tables 121 to manage the content purchased by the user and the remaining usage rights (license) entitled to the user for the content per each usage aspect. (For example, reproduction, moving, copying, printing, usage duration, etc.)

The content information DB 130 stores related information of the content (such as a content key). To put it concretely, the content information DB 130 holds multiple content keys 131 that encrypts the content, a content key table 132 that records a correlation between the content key 131 and the content ID, and so on.

The content DB 140 stores the content. To be more specific, the content DB 140 stores and holds multiple contents 141 and a content table 142 that records a correlation between the content and the content ID.

The user authentication unit 150 authenticates the user. Specifically, the user authentication unit 150 uses the user management table 111 to specify the rights managed on the server and a user ID from the ID information (client ID) contained in the content purchase request and the LT issuance request received from the user terminals 200a to 200c. The user authentication unit 150 may update the user information in the user management table 111 if a user's address, etc. are changed, and may add the client ID to the user management table 111 if some user's terminal device is purchased.

The user right processing unit 160 registers the user right information for the content according to the purchase requests and updates the right information according to the usage requests. To be specific, after a billing process is executed according to the content purchase request, the user right processing unit 160 registers the rights of the user to the user right information management table 121 in the user right information DB 120.

Since the billing process itself is not a nature of the present invention, the part of the billing process is not described in the figure. Also, when the user right is registered, an initial value set by the content provider as UR-Us (Usage Rule for User on server) which is the user right information managed on the server is assigned. Additionally, when there is a LT issuance request, the user right processing unit 160 confirms whether it is possible to extract the usage right UR-Uc (Usage Rule for User on client) from the right information UR-Us at that point to the user or not. And, once it is confirmed, it passes the requested usage right UR-Us to the license information generation unit 165, and at the same time, updates a right information UR-Us managed on the server with the details decremented for the extracted UR-Uc. Furthermore, if there is a notification to change the right information from the content provider, for example, if there is a notification to add some extra numbers of usages or to extend the usage duration as a complimentary service to the content buyers, the user right processing unit 160 updates the license information evenly for each buyer.

The license information generation unit 165 generates the usage rights of the content and license information requested.

The content information generation unit 170 acquires the content key from the content information DB 130 and generates the content information (LT) that includes the license information provided from the license information generation unit 165 and the content key information acquired. To be more specific, the content information generation unit 170 acquires the content key 130 corresponding to the content ID by access the content information DB 130 with the content key table 132, and generates LT which includes this content key, the extracted usage rule (UR-Uc) and the license information provided from the license information generation unit 165.

The content information encryption unit 175 encrypts the content information.

Specifically, when the content key and footer on LT are added, the content information encryption unit 175 encrypts this footer if needed. This encryption, for example, encrypts the object by the terminal ID (client ID) of the user terminals 200a to 200c, which has made a request to issue LT. In such a way of the encryption handled by the client ID, LT can be bound to the user terminal holding the client ID.

Using public key cryptography, it may be encrypted by the public key of the user. It may also be encrypted with a secret key shared between the server and the terminal.

Also, SAC (Secure Authenticated Channel) in a correlated authentication such as SSL (Secure Sockets Layer) is formed between the server 100 and the user terminals 200a to 200c, and if a secure communication channel is assured between the server and the terminals, the encryption of the license information is optional (not mandatory). However, in this embodiment, the explanation is given based on the premise that the content information encryption unit 175 executes the LT encryption process and that SAC is generated with the server terminals.

The content acquisition unit 180 acquires the specified content from the content DB 140. To be more specific, the content acquisition unit 180 refers to the content table 142 in the content DB 140 and acquires the content 141, which corresponds to the content ID, and passes it to the content encryption unit 185.

The content encryption unit 185 encrypts the content. To put it concretely, the content encryption unit 185 encrypts the content provided from the content encryption unit 185. The content key handles this encryption.

A communication unit 190 communicates with the user terminal 200. To be more specific, the communication unit 190 is a communication interface, which is realized by scripts, programs, etc. stated on the web page that communicates with the user terminals 200a to 200c via the communication network 300. It analyzes commands and messages sent from the user terminals 200a to 200c, and based upon the result, may request a process to the user authentication 150, distributes the content provided from the content encryption unit 185 to the user terminals 200a to 200c, distributes LT provided from the content information encryption unit 175 to the user terminals 200a to 200c, and then generates SAC with the server.

On the other hand, the user terminal 200 is equipped with a communication unit 210, operation unit 220, ID information storage unit 230, content storage unit 240, LT storage unit 245, content information decryption unit 250, license information processing unit 260, content decryption unit 270 and external media access unit 280.

The communication unit 210 communicates with the server 100. To be more specific, the communication unit 210 is a communication interface, which communicates with the server 100 via the communication network 300 using the browser software, etc. It sends a message for the content purchase request and for the LT issuance request according to the request from the operation unit 220, stores the content sent from the server 100 to the content storage unit 240, stores LT to the LT storage unit 245, and generates SAC with the communication unit 190 on the server 100.

The operation unit 220 is a user interface, which accepts user's operations, and displays the web page provided by the server 100, and so on.

The ID information storage unit 230 stores ID information (client ID) of the terminal. To be more specific, the ID information storage unit 230 stores and holds the unique client ID previously embedded for each terminal. Also, the ID information storage unit 230 may hold the public and private keys in the public key cryptography for encrypting LT, or the secret key in the shared key encryption method.

The content storage unit 240 is comprised of, for example, HDD, etc., and stores the encrypted content.

The LT storage unit 245 stores LT sent from the communication unit 210.

The content information decryption unit 250 decrypts the content key and license information from the received content information (LT). To be more specific, the content information decryption unit 250 decrypts the content key, etc. included in LT stored in the LT storage unit 245 by using the client ID, the private key in the public key cryptography, or the secret key in the shared key encryption method.

The license information processing unit 260 identifies whether the content key can be used based on the license information or not. To be more specific, the license information processing unit 260 decides if the reproduction is possible. If possible, it passes the content key to the content decryption unit 270 and monitors that the reproduction process for the content handled by the content decryption unit 270 follows the extracted usage rules.

The content decryption unit 270 decrypts the content encrypted by the content key acquired from the license information processing unit 260. Specifically, the content decryption unit 270 decrypts the encrypted content with the content key provided from the license information processing unit 260 and reproduces the content under the management of the license information processing unit 260.

The external media access unit 280 outputs either the content or LT or both to the external media 500b or the external media 500c.

The abovementioned ID information storage unit 230, LT storage unit 245, content information decryption unit 250 and license information processing unit 260 are located in a secure module of which hardware is tamper-resistant, for instance, an IC card having a built-in micro chip. In this case, the decryption of the encrypted license information and the process for the license information may take place in the security module. However, since the encryption of the license information is optional if LT is acquired from the server in a situation where SAC has been established, the decryption process is executed only for the case the license information has been encrypted. Therefore, it is a stout design against any fierce physical attacks to steal these confidential information, and makes it impossible for any external entity to illegally access the client ID, content key contained in LT, usage rules and any critical & confidential information in the light of copyright protection. The security module herein may be the tamper-resistant software. Also, the license information processing unit 260 may be located in a secure place of the user terminal.

In the content usage management system 1 structured in this way, the right information of each user for the content is all managed basically at the distribution side. The content purchased (or pre-contracted) by the user is encrypted and stored in the content storage unit 240 of the user terminal 200a. If the content stored on the user terminal 200 is reproduced, moved and copied, the request and LT issuance request messages are output on the server 100 from the user terminal 200. The server 100 confirms the usage rule (or contract) UR-Us for the content requested by the user, and if there are usage rights of the user, it distributes the content information and LT that includes "license information" and the content key to the user. The license information is comprised of enable/disable information for reproduction, moving and copying of the content and the user terminal uses the content in the way permitted in the license information.

If the user acquires an individual content through the purchase, etc., the usage rule regarding the content acquired by the user is put under the management of the user right information DB 120 on the server 100. This type is called as a pay per use model. This system is also applicable to other models such as a subscribed (pre-contracted) model. The subscribed model has the formation similar to a tier payment (billing) applied in the broadcasting of which billing system allows all of the programs in the pertinent channel be seen once a channel contract is signed. In this case, the user right information DB 120 retains the contract information as the user right information.

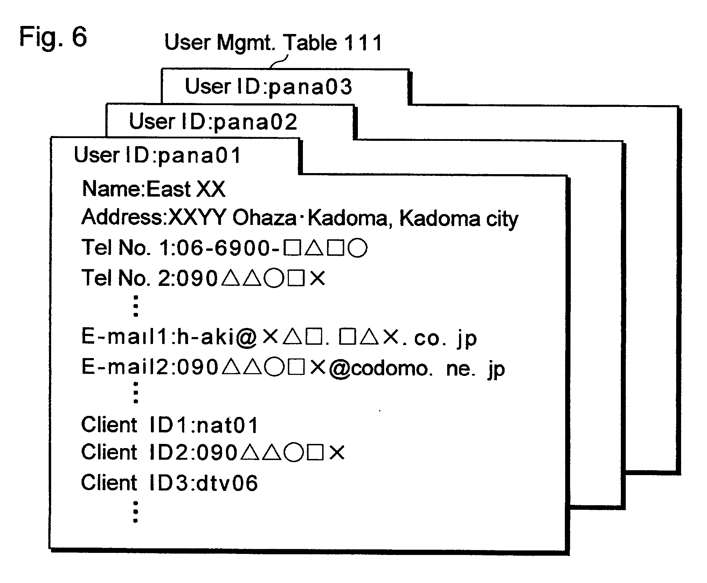

Fig. 6 is a diagram to show a configuration sample of the user management table 111 described in Fig. 5.

This user management table 111 is comprised of the user ID assigned to the user who has become a member of this content usage management system 1, the user information ("Name", "Address", "Tel No.1", "Tel No.2", ..., "E-mail 1", "E-mail 2"...), associated with this user ID, the client ID ("Client ID 1", "Client ID 2", "Client ID 3"...) that is pre-assigned to the user terminal used by this user in the content usage management system 1. By means of the user management table 111 structured in this way, once the client ID is identified, the user ID of the user who owns the terminal device having of a particular client ID can be specified.

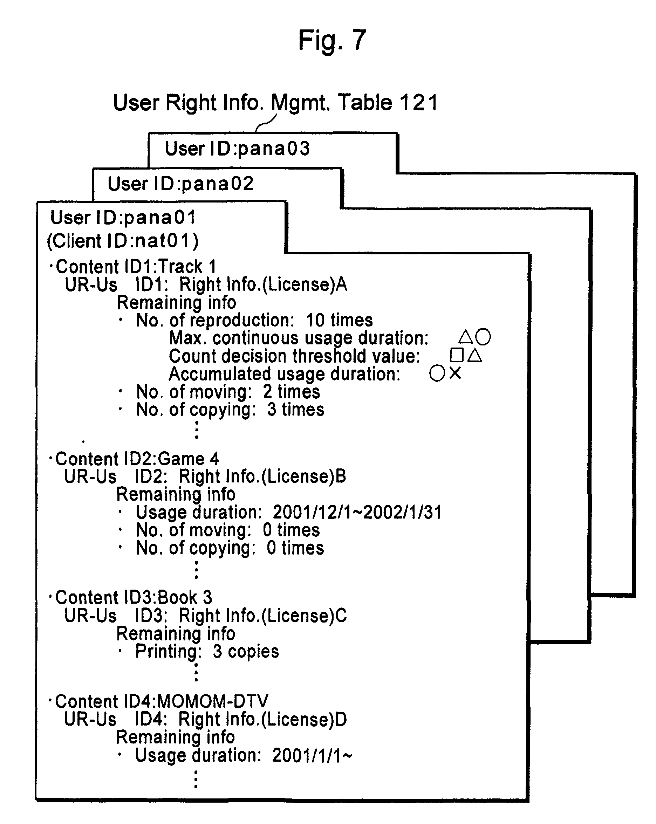

Fig. 7 is a diagram that shows a configuration sample of the user right information management table 121 described in Fig. 5.

This user right information management table 121 is set by the client ID or user ID and the content ID of the content purchased by the user and the content ID, and comprised of the ID of the user's usage rights (UR-Us) managed by the server and the remaining information set per each usage scheme of the usage rights (license) entitled to the user. The remaining information set per each usage scheme indicates respectively that; how many times each user can still reproduce, move, copy the content purchased, how long he can use it, how many printouts he can make, etc. Also, the maximum continuous usage duration set and attached to the remaining information shows the maximum length of times allowed to use the content consecutively for the reproduction process, etc., a count decision threshold value indicates the time duration counting the content usage as once, and an accumulated usage duration shows the accumulative time duration that the content can be used.

In the details of usage rights, an initial value is pre-defined for each of the contents by the content provider and the server manager according to the content's attributes, and the initial value is assigned as the remaining information of the license at the time of the content purchase. Even for the same content, if the sales are in the style of having different prices depended on the usage rules acquired by the user, the initial value may be different according to the purchase price. Then, the remaining information of the license may be decremented accordingly from the initial value for each of the usage rules and license information extracted based upon the user's LT issuance request, or may be incremented by a request of the content provider's service offer.

Although this user right information management table 121 manages the usage right by the user ID, it may also manage the right by the client ID.

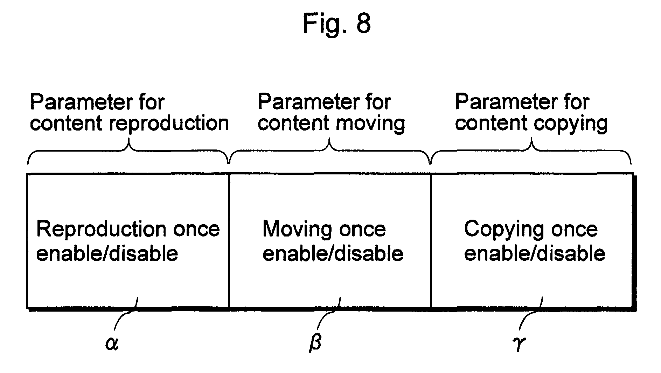

Fig. 8 is a diagram to show a configuration sample of the license information described in Fig. 5.

This license information is generated with the extracted usage right, for example, the information of minimum usage rule elements in the usage rules, and is comprised of one or multiple enable/disable information regarding the use of the content. Each of the enable/disable information is structured only from a parameter that shows Yes/No. α in Fig. 8 indicates enable/disable information for an action of reproduction, β indicates enable/disable information for an action of moving, and γ indicates enable/disable for an action of copying. The type and the number of the enable/disable information depend on the attributes of the content's.

Although the case of the minimum usage right has been explained here, if the user makes a request, it is allowed to generate as many extracted usage rights as requested, i.e. not only the enable/disable information, but also it is allowed to generate the license information which includes the usage rules for multiple numbers of times. Fig. 8 also shows a sample that a piece of license information is composed of a rule for multiple use of the content; however, it is also possible to structure each component of the license information as independent information, and multiple components are bound and handled as license information for one content.

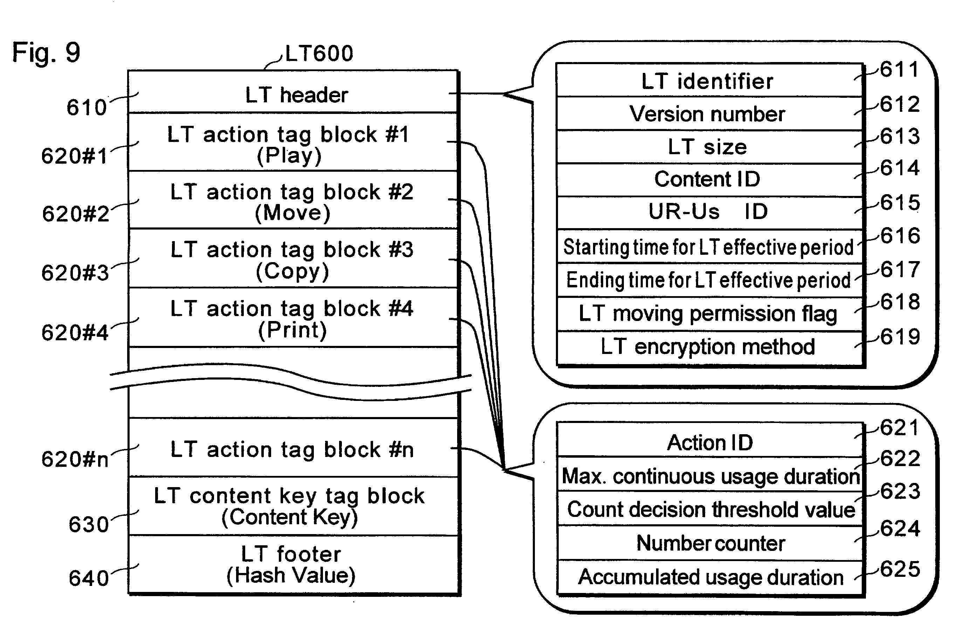

Fig. 9 is a diagram to show a data format structure of the content information and LT generated by the content information generation unit 170.

LT 600 generated by the content information generation unit 170 is comprised of the LT header 610 and license information, i.e. an action as the operating details of the content, one or more LT action tag block(s) 620#1∼620#n to show the rules, etc. for the action, LT content key tag block 630 and LT footer 640.

The LT header 610 is comprised of a LT identifier 611 that shows this data is the license ticket handled in the content usage management system 1, version number 612 that shows the version of specifications defined in the content usage management system 1, LT size 613 that shows data size of the entire LT, content ID 614 that shows a content ID of the content associated with this LT, UR-Us ID 615 that shows an ID of UR-Us originated this LT issuance, starting time 616 for a LT effective period that shows the date and time when this LT becomes effective, ending time 617 for the LT effective period that shows the date and time when this LT becomes ineffective, LT moving permission flag 618 that shows if moving the content or LT is allowed from one user terminal to some external media or another user terminal, and LT encryption method 619 that shows an encryption method (DES, AES, etc.) applied to the LT content key tag block 630 and LT footer 640.

The LT action tag blocks 620#1∼620#n are comprised of the action ID 621 that shows the ID to specify the action details for the content, the maximum continuous usage duration 622 that shows the maximum length of time to operate the content consecutively, the count decision threshold value 623 that indicates as the time duration counting the content operation as once, a number counter 624 that shows the maximum number of operations for the content with this LT, and the accumulated usage duration 625 that shows the accumulative time duration that the content can be used. Regarding the maximum continuous usage duration, for example, even though the content is a 2 hours-long movie and you have to suspend (pause) its reproduction for some reason such as going to a bathroom, it is usually set longer than 2 hours (for instance, 4 hours). The accumulated usage duration is used to have more strict control over the usage than the maximum continuous usage duration, and usually set longer than 2 hours, but shorter than the maximum continuous usage duration (for instance, 3 hours).

If the count decision threshold value 623 is "0", it counts as once when the content operation (usage) is started on the user terminal 200a. And if certain time duration is specified to the value, it counts as once when it reaches the duration. Also the value set in the number counter 624 is subtracted every time the operation of the content takes place. However, if the count decision threshold value is effective (if it is not "0"), it is only subtracted at the point when the consecutive operation time of the content reaches the value in the count decision threshold value. Also the subtraction of the number counter is done only during the consecutive operation. Additionally, the time durations set for the maximum continuous usage duration 622 and for the accumulated usage duration are subtracted in accordance with the operation time of the content. The time duration set for the maximum continuous usage duration 622 is subtracted even during the pause, whereas the subtraction is stopped during the pause for the time duration set in the accumulated usage duration 625. It shows enable if the value in the number counter 624 is 1 or more, shows disable if 0, and shows the minimum usage rule if 1. Therefore, the number counter 624 may also be used as the enable/disable information.

In the LT content key tag block 630, the content key and the decryption key that decrypts the encryption of the content associated with this LT are stored.

The LT footer 640 is an optional block that may or may not be attached. If attached, a hash value by SHA-1 algorithm is stored to avoid any alterations on the LT header 610 to the part just before the LT footer 640, which means the part up to the LT content key tag block 630.

Although the content ID has been stored into the LT header 610 on this LT 600, the content ID may be set as an identifier to associate the content information with the content, and thereby it may become important for making the content information specified by the content ID acquired at the time of the content usage. In such a case, it may be stored in the tag block.

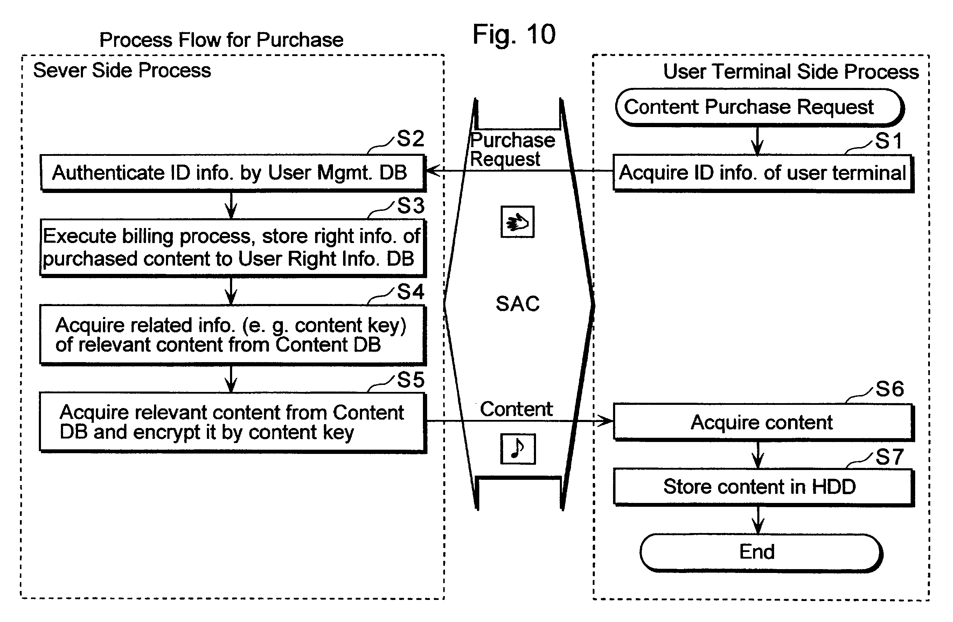

Regarding the content usage management system 1 in the embodiment of the present invention as structured above, the actions taken for the content purchase shall be explained below with references to the flow chart shown in Fig. 10.

Fig. 10 is a flow chart, which shows processes executed respectively at the user terminal 200a and on the server 100 when a user purchases the content in this system.

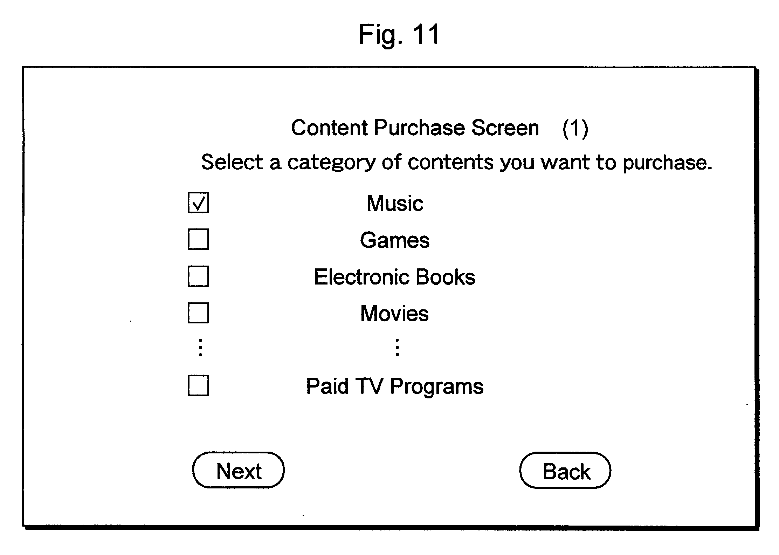

When the content is purchased, the user at the user terminal 200a operates the operation unit 220, accesses a web page on the server 100, and calls up the content purchase screen (1) indicated in Fig. 11.

The content purchase screen (1) is made up of an indication of categories which are available for a network purchase in this system such as "music", "games", "electronic books", "movies", ... , "paid TV programs", a check box to select these categories, a "Next" button, a "Back" button, and so on.

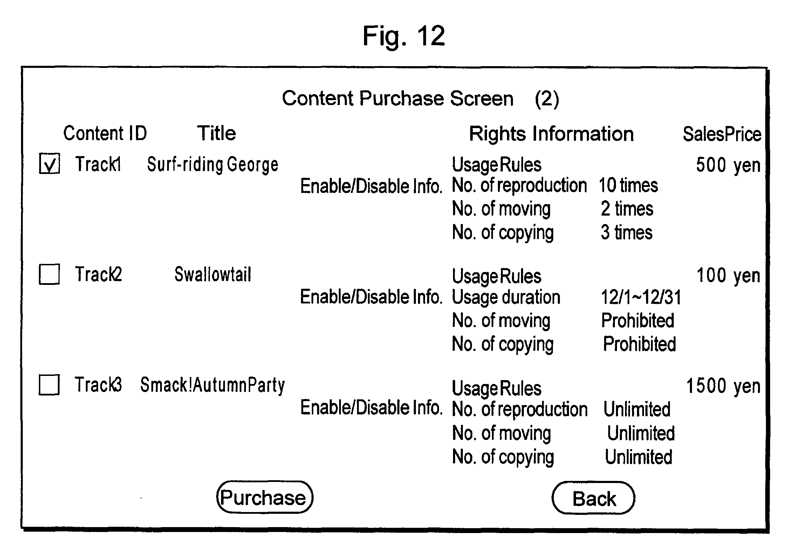

If the category of the content to be purchased is music, the user operates the operation unit 220, clicks on the check box corresponding to "music", and presses the "Next" button. This makes the content purchase screen (2) shown in Fig. 12 displayed.

This content purchase screen (2) is comprised of the category, details of "content ID", "title", "right information", "sales price" for the tracks belonging to music, a check box to select these tracks, a "Purchase" button, a "Back" button, etc. The "right information " shows the original usage rules set by the content provider such as the initial value, number of reproduction, number of moving, number of copying, usage duration, etc. If the track to be purchased is "Surf-riding George", the user operates the operation unit 220, clicks on the check box corresponding to "Surf-riding George", and presses the "Purchase" button to enter his content purchase request.

If there is a request made by the user to purchase the content, the communication unit 210 in the user terminal 200a generates SAC with the communication unit 190 on the server 100, then acquires the ID information (client ID) of the user terminal 200 that is stored in the ID information storage unit 230, and sends the content purchase request message including this ID information to the server 100 (S1). This content purchase request message is comprised of, for example, a message ID that indicates the content purchase, the content ID of the content requested to be purchased, the client ID of the user terminal that requests the content purchase.

Once the user authentication unit 150 receives this information through the communication unit 190 on the server 100, it collates the received ID information with the ID information stored in the user management DB 110 for the user authentication, and passes the content purchase request to the user right processing unit 160 (S2). To put it concretely, the user authentication unit 150 refers to the user management table 111, specifies the user ID from the client ID, and then passes the user ID, the content ID, etc. as the content purchase request to the user right processing unit 160.

After executing a billing process for the content purchase, the user right processing unit 160 registers the user's right information for the content purchase to the user right information DB 120(S3). Specifically, the user right processing unit 160 specifies the user right information management table 121 (See Fig. 7) for the user (for example, East XX) who purchases the content from the user ID "pana 01" by access the user right information DB 120. And then the user right processing unit 160 stores Track 1 respectively to a field of the content ID on the user right information management table 121 and stores the ID, "right information A" and its details of the right information UR-Us for Track 1 respectively to fields of the license information per each content ID. For the details of this right information A, the remaining information (Nos. of reproduction, moving and copying, etc.) of the initial values set by the content provider is entered. Then, the user right processing unit 160 passes the content ID to the content information generation unit 170.

The content information generation unit 170 acquires the related information (such as the content key) of the concerned content from the content information DB 130 (S4). Specifically, the content information generation unit 170 accesses the content information DB 130, acquires the content key 131 corresponding to the content ID with reference to the content key table 132, and passes the acquired content key and the content ID to the content acquisition unit 180.

The content acquisition unit 180 acquires the concerned content from the content DB 140, and the content encryption unit 185 encrypts this content with the content key. To be more specific, the content acquisition unit 180 accesses the content DB 140 and acquires the content corresponding to the content ID with references to the content table 142, and passes the acquired content, the client ID, and the content key received from the content information generation unit 170 to the content encryption unit 185. The content encryption unit 185 encrypts the received content by the content key and passes the encrypted content to the communication unit 190. The communication unit 190 on the server 100 sends the encrypted content to the user terminal 200 (S5).

Once the encrypted content is received (S6), the communication unit 210 of the user terminal 200 sends the content to the content storage unit 240 to have it stored (S7).

Throughout these processes executed respectively in the user terminal 200a and on the server 100, the session for the content purchase is completed.

Since SAC is generated between the user terminal 200a and the server 100 and the encrypted communication takes place with a shared session key within the session for the content purchase session, it is possible to prevent the content purchase request message from being exposed on the network.

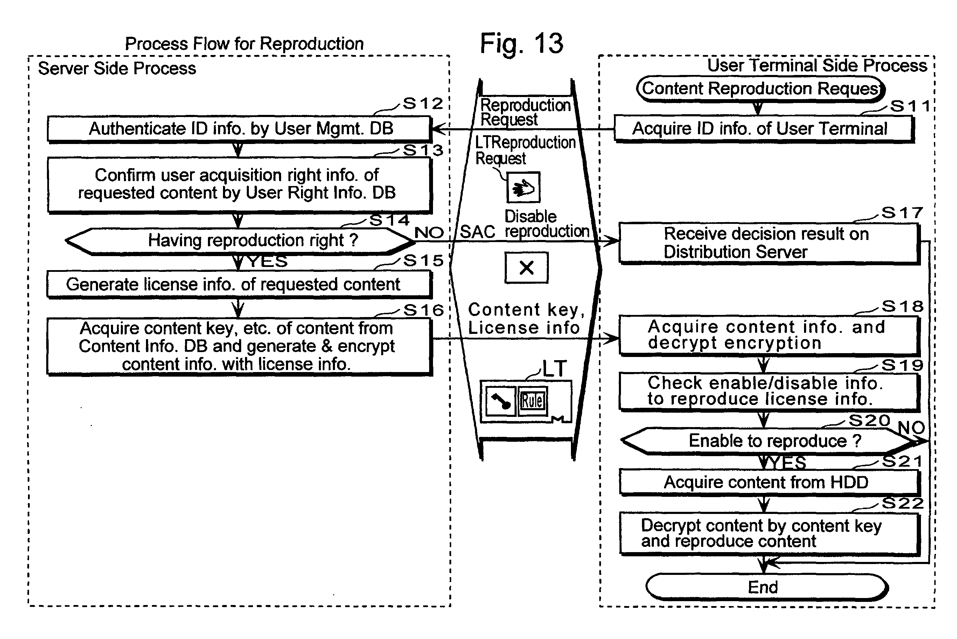

Fig. 13 is a flow chart to show the processes conducted respectively in the user terminal 200a and on the server 100 when the user uses the content in this system.

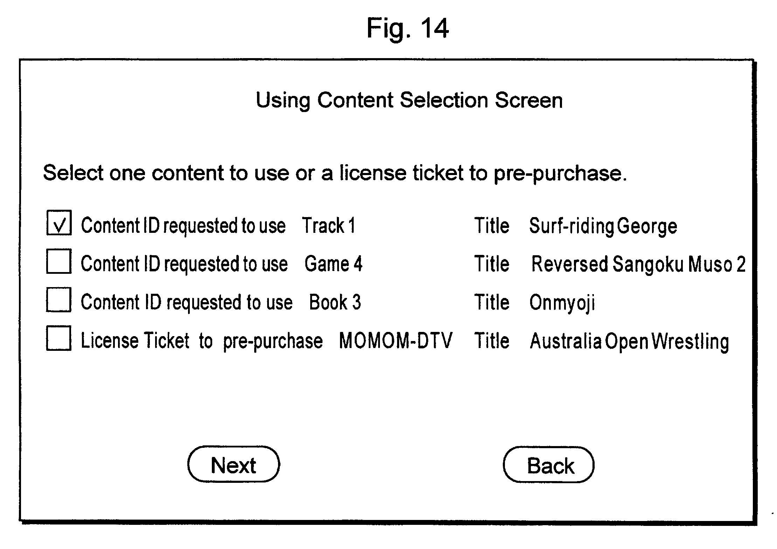

If the content is used, the user at the user terminal 200a operates the operation unit 220 to display the using content selection screen shown in the Fig. 14. This using content selection screen is comprised of the title, content ID of the content purchased by the user at the user terminal 200a, or a pre-application of the license ticket for the content pre-contracted, etc. and check boxes for these contents, "Next" and "Back" buttons, etc.

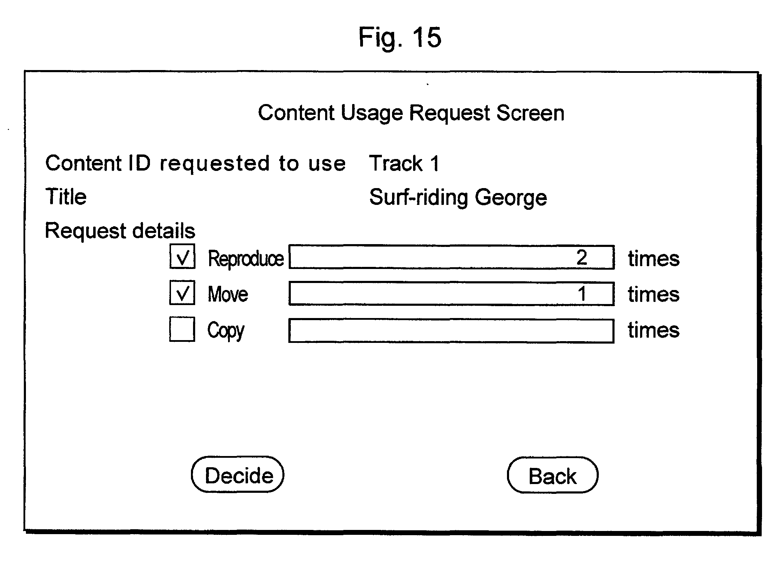

If the content is used, the user operates the operation unit 220 and enters his usage information of the content to be reproduced. To put it concretely, the user displays the using content selection screen as shown in Fig. 14, marks on the check box for the content he wants to reproduce (for example, Surf-riding George) and clicks on the "Next" button. And then, he displays the content usage request screen as shown in Fig. 15. The content usage request screen is comprised of actions available for this content, reproduction, moving and copying, check box to select the action, text box to enter the number of actions, a "Decide" button, a "Back" button, etc.

As a part of the entry for the usage information, the user operates the operation unit 220, marks on the check box required for the requesting details (in this particular example, reproduction and moving) of the content selected (Surf-riding George), enters the numbers of requests (In this particular example, "2 (twice)" for reproduction and "1(once)" for moving) in the text box for the requesting details being marked.

If the check box is marked, the text box is defaulted to "1" as the minimum usage rule. Then if the user wants to use it "2 (twice)" or more, he can simply enter the number he wants in the text box.

If there is a content reproduction request from the user, the communication unit 210 in the user terminal 200 generates SAC with the communication unit 190 on the server 100, acquires the ID information (client ID) on the user terminal 200 stored in the ID information storage unit 230, and then sends the LT issuance request message including this ID information to the server 100 (S11). This LT issuance request message, for example, is comprised of the message ID that indicates the LT issuance request, content ID (for example, Track 1) of the content to be used, content reproduction request, i.e. the requesting information (Twice for reproduction, once for moving) that indicates the details of the content usage request and client ID (for example, nat01) of the user terminal that requests to issue LT.

The user authentication unit 150 that receives this information via the communication unit 190 on the server 100 collates the ID information received with the ID information stored in the user management DB 110 for user authentication and passes the user information and the content reproduction request to the user right processing unit 160 (S12). To be more specifically, the user authentication unit 150 refers to the user management table 111, specifies the user ID from the client ID, and then passes the user ID, and the client ID, content ID, requesting information, etc. as a request to reproduce the content to the user right processing unit 160.

The user right processing unit 160 confirms the user right information for the content requested, which is registered to the user right information DB 120 (S13). Specifically, the user right processing unit 160 accesses the user right information DB 120 and specifies the user right information management table 121 (See the Fig. 7) for the user (for example, East XX) who uses the content from the user ID "pana01". Then, the user right processing unit 160 refers to Track 1 in the field of the content ID on the user right information management table 121, and confirms if reproduction and moving are still included in the remaining information (UR-Us) of Track 1, if numbers of reproduction and moving requested are still remaining in the information, and so on.

In the case of a subscribed model (pre-contracted model), confirmation to the user right information is conducted by the validation in which subscription (contract) the requested content is included, and whether the user holds the concerned subscription or not.

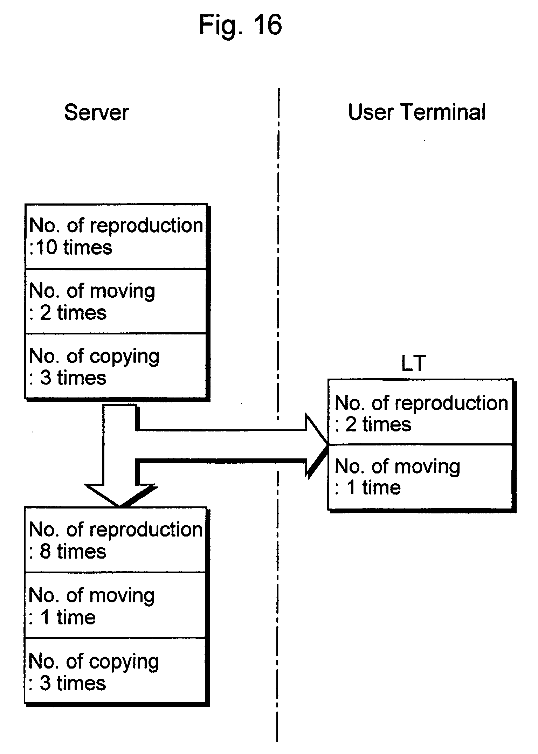

When the right information for reproducing the requested content is included in the registered right information (S14), the user right processing unit 160 reports the enable/disable information of reproduction based on the right information to the license information generation unit 165, updates details of the right information for reproduction (decrements the number available for reproduction) and stores it to the user right information DB 120 (S15). The license information generation unit 165 generates the license information based on the information provided from the user right processing unit 160 and passes it to the content information generation unit 170 (S15). To be specific, the user right processing unit 160, as shown in Fig. 16, updates "10 times" for reproduction, "Twice" for moving and "3 times" for copying in the remaining information of the content ID for the user ID "pana01" to "8 times" for reproduction, "Once" for moving and "3 times" for copying. In other words, the usage rules (UR-Us) for reproduction are decremented from 10 times to 8 times and for moving from 3 times to Twice, and the license information generation unit 165 passes the license information of "Twice" for reproduction and "Once" for moving to the content information generation unit 170, and makes it send to the user terminal 200a as LT.

At the discretion of the server side, it is also possible to send the usage right as LT, which is not met with the usage right requested from the user terminal. For example, even if the user terminal requests the right to reproduce the content twice, sending the reproduction right for once as LT makes it possible to reserve the policy for sending the minimum usage right every time according to the business decision, etc.

The content information generation unit 170 reads the content key information for the relevant content from the content information DB 130 and generates the content information (LT) that includes this content key and the license information (S16). Specifically, the content information generation unit 170 generates LT 600 which is comprised of LT header 610, LT action tag block 620 #1 having "2" in the number counter value for the action of reproduction, LT action tag block 620 #2 having "1" for the number counter value for the action of moving, LT content key tag block 630 and LT footer 640. The content information encryption unit 175 encrypts this content information (S16). To be more specific, the content information encryption unit 175 encrypts the LT content key tag block 630 and the LT footer 640.

The communication unit 190 on the server 100 sends the encrypted content key and the license information as LT to the user terminal 200.

In the Step S14, if the user right information does not contain the right information of reproduction for the requested content, a reproduction disable response message is sent from the server 100 to the user terminal 200. This reproduction disable response message is comprised of, for example, the message ID indicating that it is a response for the LT issuance request message and the status ID indicating that the reproduction is disable since there is no UR-Us pertinent to the request.

On the other hand, in the user terminal 200, the communication unit 210 receiving the content information sends LT and the client ID stored in the ID information storage unit 230 to the content information decryption unit 250 after the LT has been stored in the LT storage unit 245 (S18). The content information decryption unit 250 decrypts the encrypted content information (LT) by the client ID, and passes the license information and the content key to the license information processing unit 260 (S18).

The license information processing unit 260 checks the reproduction enable/disable information of the license information (S19). If OK to reproduce (S20), it passes the content key to the content decryption unit 270. To put it concretely, the license information processing unit 260 checks if the number counter for the action of reproduction is 1 or more. If it is 1 or more, it passes the content key to the content decryption unit 270. The content decryption unit 270 acquires the content from the content storage unit 240 (S21), decrypts the content with the content key, and reproduces Track 1, "Surf-riding George" under the management according to the extraction usage rules in the license information processing unit 260 (S22).

By the way, the LT action tag block 620#1 for the action of reproduction includes the count decision threshold value, the maximum continuous usage duration, and the accumulated usage duration besides the number counter value.

Therefore, for content reproduction at the user terminal, it applies a method to decide reproduction is executed once if a certain period of time has passed since the start of reproduction. By distributing this information about the certain period of time from the distribution server, it can be variable.

It is also possible to apply the method as follows. When content reproduction is started, it is counted as once. And if it is within a certain period of time from the start of the reproduction, any reproduction acts are regarded as the same reproduction and permitted. The information indicating its scope can be distributed and treated as the time limit for counting the reproduction as once.

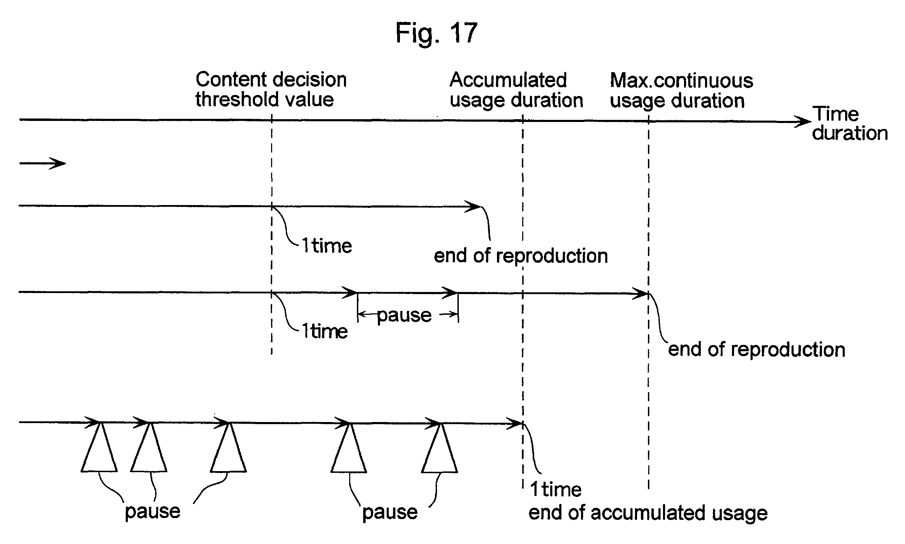

In other words, as shown in Fig. 17, as long as a certain period of time is set as the count decision threshold value, the reproduction is not counted as once if it is less than the time (for instance, pre-reproduction). And reproduction is counted as once when it reaches the count decision threshold value. And if the time is set in the maximum continuous usage duration, it can realize a flexible usage scheme, which makes it possible to make a suspension (a pause) during reproduction because it just exercises the right of reproduction for once and the content can be reproduced periodically until it reaches the maximum continuous usage duration. Also if a certain period of time is set in the accumulated usage duration, the content can be accumulatively reproduced until it reaches the accumulative usage duration. Therefore, a wide variety of content usage can be provided to the user.

Furthermore, the policy for making decisions on the period available for reproduction can be changed based on the content type (for example, movie and music).

When a reproduction disable response message is received from the server 100 (S17), and the license information is unable to reproduce in Step 20, it terminates the process without reproducing the content. In this case reproduction disable is notified, for example, by a response message formed with the status code ERROR_URUS, which indicates that there is no usage right UR-Us relevant to the request. Also, reproduction disable may be notified with LT containing the LT action tag block 620 of which reproduction number counter value is set to "0".

Also, when the license information stipulates the content can be used just once, the license information processing unit 260 deletes this license information after the content is used, or triggers the flag to show it is no longer effective, and executes a process to nullify the license information (LT).

In case the license information contains multiple action rules (for example, reproduction and moving) and a combination of those is handled as the license information for one content, only the rule pertinent to this particular usage (for example, reproduction) is nullified.

Also, even if it is a subscribed model, on one hand, unlimited number of usage may be permitted to each of the content (for example, tier billing), but on the other hand, an upper limit is defined for the usage rule. (For example, the upper limit of a monthly charge is 5000 yen for PPV (Pay Per View).) If there is the upper limit for the usage rule, at the confirmation of the user right information, it validates whether the user holds the usage rule of the concerned content (validation of the pay per use model) after the aforementioned contract is validated. Additionally, the user right information DB 120 may be split into the databases for the contract information and for the usage rules to be managed respectively.

If the license information allows to move or copy the content in this content usage management system 1, it is possible to move the right information (usage rules) and the content key with the content to the external media 500b and 500c via the external media access unit 280. In such a case, the right information is moved and copied after it is converted into the data format supported by the external media 500b and 500c. Moreover, encrypted conversion (re-encryption) is conducted to the content in an encryption method supported by the external media 500b and 500c. Similarly, the content key is converted into the encryption key corresponding to the encryption method supported by the external media 500b and 500c. Using the external media in this way makes it possible to use the content, and at the same time, copyrights of the content are protected by a content management method different from this content usage management system 1. However if the external media is capable of supporting the content usage management system 1 in the present invention, it is unnecessary to have the data conversion of the right information and encrypted conversion of the content.

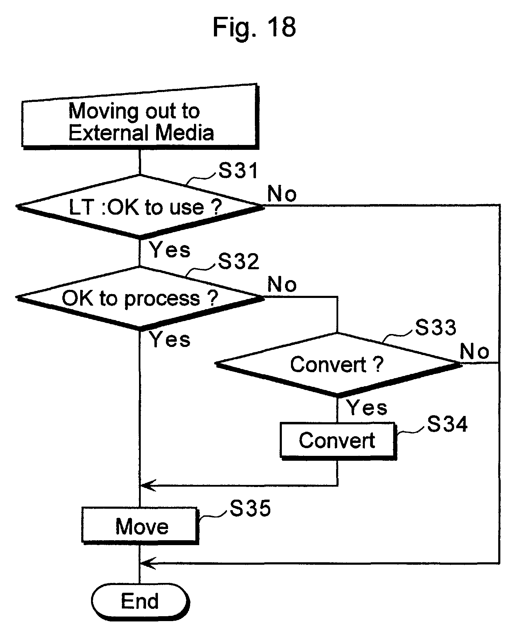

Fig. 18 is a flow chart to show the process executed at the user terminal 200a for the case the content or LT is moved out to the external media.

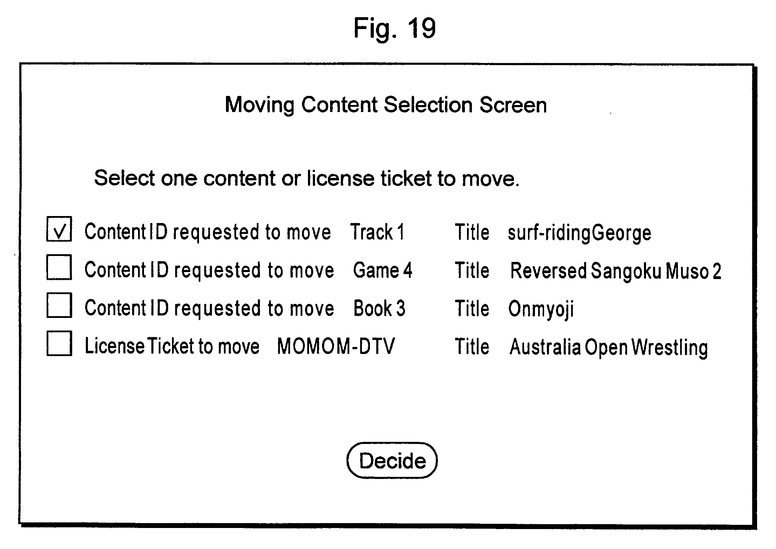

If the content or LT is moved, the user at the user terminal 200a operates the operation unit 220 to display the moving content selection screen shown in Fig. 19. This moving content selection screen is comprised of the title and content ID of the content purchased by the user at the user terminal 200a, or the license ticket, etc. received in advance, these contents, check boxes for LT, a "Decide" button, etc. The user displays the usage content selection screen shown in Fig. 19, marks on the check box for the content he wants to move (for example, Surf-riding George) and clicks on the "Decide" button.

If there is a request for moving the content from the user, the license information processing unit 260 in the user terminal 200a passes the client ID stored in the ID information storage unit 230 and LT stored in the LT storage unit 245 to the content Information decryption unit 250. The content information decryption unit 250 decrypts the encrypted content information (LT) by the client ID and passes the license information and the content key to the license information processing unit 260.

The license information processing unit 260 checks the enable/disable information for moving the license information, and decides whether it is O.K. or not O.K. to use, in other words, decides whether the number counter value in the LT action tag block 620#2 for the action of moving is 1 or more (in the case of "before use" or "after use and O.K. to use") (S31). If it is available to use (Yes in S31), the external media 500b or the external media 500c validates through the content encryption unit 270 and the external media access unit 280 if the LT can be processed or not (S32).

If it cannot be processed (No in S32), the license information processing unit 260 decides whether the usage rules are formatted to the information converted into the content control information (S33). More specifically, the license information processing unit 260 decides whether the external media 500b or the external media 500c can manage the content with the content control information in a secure, tamper-resistant module. If it can manage, then the license information processing unit 260 converts the LT action tag block 620 #2 for moving to the content control information (S34), and passes the converted content control information and the content key to the content decryption unit 270. The content decryption unit 270 acquires the content from the content storage unit 240, decrypts the content with the content key, and passes the decrypted content and the content control information provided from the license information processing unit 260 to the external media access unit 280. The external media access unit 280 moves the decrypted content and the content control information provided from the content decryption unit 270 to the external media 500b or the external media 500c (S35).

Also, if the process in Step S32 is possible, the license information processing unit 260 passes LT to the content decryption unit 270. The content decryption unit 270 acquires the content from the content storage unit 240, decrypts the content by the content key and passes the decrypted content and LT provided from the license information processing unit 260 to the external media access unit 280. The external media access unit 280 moves the decrypted content and LT provided from the content decryption unit 270 to the external media 500b or the external media 500c (S35). In this case, the content decryption unit 270 passes the content without having it decrypted to the external media access unit 280, and the external media access unit 280 can move the content being encrypted to the external media 500b or the external media 500c (S35).

Therefore, through the external media 500b or the external media 500c, the content is available for use in other terminals such as a mobile information terminal and a digital television receiver.

If it is not available for use in Step S31, in other words, the number counter in the LT action tag block 620 #2 for the action of moving is "0", or the external media 500b or the external media 500c cannot manage the content with the content control information in a secure, tamper-resistant module in Step S33, the license information processing unit 260 terminates the moving process. Therefore, its copyright is never infringed.

Although the moving process has been explained in this flowchart, it can also be applied to a copying process if Step S35 is changed to the process for copying. Also, only the LT acquired in advance can be moved or copied to the external media 500b or the external media 500c.

As mentioned above, it is possible to make the content usage of each user be managed mainly at the server side in this system. Therefore, the server can grasp the usage status of the content at each terminal. Also, in case a certain service is provided due to a special campaign, etc. to expand the right that has already been acquired by the user, it can simply be realized by upgrading the user right information stored on the distribution server.

Meanwhile, the user terminal just needs to control reproduction, moving, copying, etc. based on the license information, so that it can get rid of having any extra loads of processes for managing complicated usage rules. Also, the centralized usage rule management at the distribution server side can avoid any unauthorized use by the terminal such as alteration on the usage rules.

As has been clarified from above explanation, by means of the content usage management system related to the conformation of this embodiment, the server 100 generates LT that is the right information to indicate a part of the usage rule owned by the concerned user based on the user right information DB 120, which memorizes the right information related to the usage rule of the content owned by the user who uses the user terminal 200a, and the request from the aforementioned user, is equipped with the content information generation unit 170 that sends it to the user terminal 200a, and the user terminal 200a is equipped with the communication unit 210, which receives LT sent from the server 100, and the license information processing unit 260, which controls the use of the content according to the usage authorization indicated on the received LT.

Therefore, the terminal device doesn't need to manage all of the usage authorization owned by the user, is able to control the content usage just by managing a part of the user's usage authorization indicated on the license ticket so that it extensively reduces the loads of process required for the management in the terminal device. Also, the server device is able to grasp the status of the content usage at each terminal device in conjunction with the license ticket issuance. Even if a copy of the content is taken at the terminal, it can detect at what time the copy was taken on what media as a query is made to the server device for copy permission, which makes it possible to keep track of the content. Moreover, because the server device holds the usage authorization owned by the user, the usage rules of the user, etc. can be restored easily even if the storage mechanism (HDD) in the terminal device is crashed. Also, it can easily conduct the processes to add some usage rules and to provide service to expand the usage rules such as to add "1" automatically for the number of reproduction in the usage rules for the content. Furthermore, it ensures to prevent the content from being used unlimitedly by the terminal device, for the content usage control mechanism in the terminal device controls the use of the abovementioned content according to the usage authorization indicated on the received license ticket.

In the embodiment above, the content, which is not encrypted, is stored in the content DB 140, and then it is encrypted and distributed at the time of content purchase (Fig. 10, S5). However, the content key on the server 100 can encrypts the content in advance and it is stored in the content DB 140. In this case, when there is a purchase request from the user, the encrypted content can be sent as is, which makes it possible to reduce the load of process on the server and the latency time of the user.

Also, in the embodiment above, the explanation has been given for the case to send the content and LT via communication, but it is also possible to send the content and LT through broadcasting. In this case, if the license information of the user is distributed to the user terminal prior to the actual use of the content or the content and LT are pre-distributed at the same time via broadcasting, it becomes possible to use the received content immediately, and consequently it improves the response when the content is used. Also, since it can eliminate the communication process at the time of content usage, the load of process on the distribution server can be reduced.

Additionally, in the embodiment above, though the content information encryption unit 175 executes the encryption process for LT at the same time SAC is generated with the server terminals, the encryption process for LT handled by the content information encryption unit 175 may be omitted.

Also, in case the license information is not yet encrypted when the license information is acquired from the server, it may be encrypted by user-unique information such as a terminal ID (client ID) and stored when LT is stored in the LT storage unit 245 so that disclosure of the content key, any unauthorized alteration and any unauthorized usage by other user can be avoided. However, encryption is not required if the LT storage unit 245 is realized in a tamper-resistant hardware.

Also, it may apply to the formation that some recorded media such as CD-ROM, DVD-ROM to which various types of encrypted contents are recorded is distributed as a supplement of magazines, and the user purchases only those he likes. Or it may also apply to the formation that a distributor side distributes various types of contents in advance by using the distribution channel in broadcasting, makes them stored in the content storage unit 240 within the user terminal 220a, and the user purchases only those he likes. In these cases, if the user takes an appropriate purchase procedure, the right of the content the user likes is generated in the user right information DB 120 on the server 100. By doing so, it becomes possible for the user to make a request to issue LT when he uses the content. In this formation, since the cost spent for the content distribution can be restrained as much as possible, the effect to restrain the price of the content itself can also be expected.

It may also apply to the formation that the recordable media such as CD-ROM, DVD-ROM where the encrypted content is recorded to is sold in the same way as the regular package. According to a registration procedure taken by user who purchases such a recorded media, the right of the purchased content is generated in the user right information DB 120 on the server 100. Then, hereafter it becomes possible to request the LT issuance every time the content is used.

Additionally, in the embodiment above, though the LT issuance request is made as soon as the user requests reproduction, it may apply the method to confirm any LT existence at first in the LT storage unit 245. If there is LT, it validates whether reproduction can be executed with the LT or not. Then, if the reproduction is possible, it reproduces the content. Only if there is no LT, LT issuance can be requested.

Also, in the formation of the abovementioned embodiment, if the user who requests to reproduce the content does not hold the right to reproduce it (No to Step S14 in Fig. 13), the reproduction disable is notified. However, it is also possible for the distribution server to conduct the process as an additional purchase for its reproduction right based on the consensus with the user or by a tacit agreement instead of giving a notice of reproduction disable. In this case, the automatic purchase can simplify the purchase procedure since it only bills those that are used.

Although the explanation was given for the case that the license information contains the enable/disable parameter allowing to do reproduction, moving or copying once, it is also possible for the license information to include the parameter either to show the permission only for once or for an unlimited number of content reproduction, and the parameter either to show no permission or unlimited permission of content moving. In this case, when the license information shows unlimited permission, the license information processing unit 260 in the user terminal 200a holds the content key and always provides the content key to the content decryption unit 270.

Furthermore, in the license information, various types of the rule for the content can be set by a combination of multiple enable/disable information. For example, only the reproduction enable/disable information, and the moving enable/disable information are distributed, and a combination of these can realize the process called "Check-in/Check-out." When the content is duplicated, "Check-in/Check-out" doesn't simply duplicate it, it enables reproduction, disables moving (naturally, copying is disabled), and establishes a relationship between the parent content and the child content to prevent the child content from being moved freely. In the case of this license information, the "Check-in/Check-out" information is held on the distribution server; however, the enable/disable information of "Check-in/Check-out" is not especially required as the license information. The relationship between the parent (server) and the child (storage media) when it is "Checked-in/Checked-out" is managed at the server side or the recipient side, and it can be expressed as the distributing information only by the combination of reproduction and moving. Therefore, it makes it possible to reduce a number of parameters distributed to the user terminal and a load of process on the user terminal, and simply to control over the generation copies, such as to prohibit copies from the child to the grandchild.

Also, in the configuration of above embodiment, though the propriety was checked in the LT footer 640, it may include the information for detecting any alteration to check the propriety by each LT action tag block 620#1 to 620#n.

Also, in structure of above embodiment, the distributed license information (LT) before use was stored in the LT storage unit 245 in the user terminal 200a, LT may be stored temporarily in the external media 500b or the external media 500c.

Additionally, in case the user terminal 200 moves the content to the external media 500b and 500c, the user terminal 200a validates whether the moving was allowed. However, the server 100 may pre-determine whether the destination of the external media 500 is capable of processing the license information, and only if it is capable, the server 100 may send the license information that permits to move the content to the user terminal. At this time, the distribution server communicates with the user terminal, acquires the information of the external media as its destination, and decides whether it's OK to move the content or not.

Also, it is possible to make the external media access unit 280 in the user terminal 200a authenticate the external media 500a and 500c and the user terminal 200a decide whether the external media 500a, 500c are capable of processing the license information, or what content control information is possible to be processed.

Furthermore, in the configuration of above embodiment, the server 100 manages content distribution, billing, etc. in bulk together with the right management; however, it may be configured to form each of the function separately for content distribution, billing, etc.

## Claims

1. A content usage management system that comprises a terminal device that uses a content as a digital production, and a server device that manages usage of the content on the terminal device via a transmission line,
wherein the server device includes:
a right information memory unit operable to memorize right information related to a usage right of the content entitled to a user who uses the terminal device; and
a license ticket issuance unit operable to generate a license ticket based on a request from a user as right information that indicates a part of the usage right entitled to the user and to send the license ticket to the terminal device, and
the terminal device includes:
a receiving unit operable to receive the license ticket from the server device; and
a content usage control unit operable to control usage of the content according to the usage right indicated on the received license ticket.

2. The content usage management system according to Claim 1,
wherein the license ticket issuance unit acquires a request from the user that specifies a part of the usage right entitled to the user, generates a license ticket corresponding to the request, and sends the license ticket to the terminal device.

3. The content usage management system according to Claim 1,
wherein the license ticket issuance unit generates a license ticket that indicates a minimum unit of a usage right included in the usage right entitled to the user and sends the license ticket to the terminal device.

4. The content usage management system according to Claim 1,
wherein a license ticket includes one or multiple numbers of enable/disable information regarding content usage.

5. The content usage management system according to Claim 4,
wherein the enable/disable information indicates whether one of reproduction, moving and copying actions for the content is enabled or disabled.

6. The content usage management system according to Claim 4,
wherein the enable/disable information indicates that usage of the content is allowed or not allowed once or more than once including unlimited numbers of times.

7. The content usage management system according to Claim 1,
wherein the license ticket issuance unit sends a license ticket to the terminal device after the license ticket is encrypted,
the terminal device further includes a decryption unit that decrypts the license ticket received by the receiving unit, and
the content usage control unit controls usage of the content according to a usage right indicated on the decrypted license ticket.

8. The content usage management system according to Claim 7,
wherein the decryption unit and the content usage control unit are a tamper-resistant security module.

9. The content usage management system according to Claim 1,
wherein the license ticket includes detective information to detect whether any details of the license ticket have been altered.

10. The content usage management system according to Claim 1,
wherein the content usage control unit verifies whether a license ticket allows any further usage of the content after the content has been used, and deletes or invalidates the license ticket if it does not allow.

11. The content usage management system according to Claim 10,
wherein the terminal device further includes an external recordable media that is detachable, and
the content usage control unit stores a license ticket in the external recordable media if the license ticket before using the content and the license ticket after using the content that permits further usage of the content, allow to move the content.

12. The content usage management system according to Claim 11,
wherein the terminal device further includes a decision unit that decides whether the external recordable media connected to the terminal device is equipped with a control unit that controls usage of the content according to the usage right indicated on the license ticket, and
the content usage control unit stores the license ticket to the external recordable media if the external recordable media is verified to include the unit to control usages.

13. The content usage management system according to Claim 12,
wherein the content usage control unit converts the license ticket into content control information in a different format if the external recordable media is verified not to include the control unit for said content usage management system.

14. The content usage management system according to Claim 6,
wherein the enable/disable information includes a condition being as a basis for deciding the content is used once, and
the content usage control unit decides that the content is used once based on the condition.

15. The content usage management system according to Claim 14,
wherein the condition is set according to a usage style of the content.

16. The content usage management system according to Claim 15,
wherein the condition is time duration spent to reproduce the content, and
the content usage control unit decides the content is used once based on duration spent to reproduce the content.

17. The content usage management system according to Claim 16,
wherein the content usage control unit regards the usage as being taken place once if duration from a start of the reproduction is within time indicated in the condition.

18. A server device that manages usage of a content in a terminal device using the content as a digital production via a transmission line including:
a right information memory unit that memorizes right information related to a usage right of the content entitled to a user using the terminal device; and
a license ticket issuance unit that generates a license ticket based on a request from the user, which is right information indicating a part of the usage right entitled to the user, and send the license ticket to the terminal device.

19. The server device according to Claim 18,
wherein the license ticket issuance unit acquires a request from the user to specify a part of the usage right entitled to the user, generates a license ticket corresponding to the request, and sends the license ticket to the terminal device.

20. The server device according to Claim 18,
wherein the license ticket issuance unit generates a license ticket that indicates a minimum unit of a usage right included in the usage right entitled to the user.

21. The server device according to Claim 18 that further acquires information related to external recordable media connected to the terminal device from the terminal device based on a request from the user including:
a decision unit that decides if the external recordable media contains a unit that controls usage of the content according to the usage right indicated on the license ticket.

22. A terminal device that receives permission of a server device via a transmission line and uses a content as a digital production including:
a receiving unit that receives a license ticket as right information indicating a part of the usage right entitled to a user; and
a content usage control unit that controls usage of the content according to the usage right indicated on the received license ticket.

23. The terminal device according to Claim 22 that further includes a decryption unit that decrypts a license ticket received from the receiving unit,
wherein the content usage control unit controls usage of the content according to the usage right indicated on the license ticket decrypted.

24. The terminal device according to Claim 22,
wherein the content usage control unit decides whether the license ticket allows further usage of the content after the content has been used, and deletes the license ticket if it does not allow.

25. The terminal device according to Claim 24 further including a detachable external recordable media,
wherein the content usage control unit stores a license ticket to the external recordable media if the license ticket before using the content and the license ticket after using the content that permits further usage of the content allow to move the content.

26. The terminal device according to Claim 25 further including a decision unit that decides whether the external recordable media connected to the terminal device is equipped with a control unit that controls usage of the content according to usage right indicated on the license ticket,
wherein the content usage control unit stores a license ticket to the external recordable media if the external recordable media is verified to include the control unit.

27. The terminal device according to Claim 26,
wherein the content usage control unit converts the license ticket into content control information in a different format if the external recordable media is verified not to include the control unit.

28. A content usage management method for a system including a terminal device that uses a content as a digital production and a server device that manages usage of the content in the terminal device via a transmission line,
wherein the server device includes:
a right information memory step to memorize right information related to a usage right of the content entitled to a user who uses the terminal device; and
a license ticket issuance step to generate a license ticket as right information indicating a part of the usage right entitled to the user based on a request from the user, and
the terminal device includes:
a receiving step to receive a license ticket sent from the server device; and
a content usage control step to control usage of the content according to the usage right indicated on the license ticket received.

29. The content usage management method according to Claim 28,
Wherein, in the license ticket issuance step, the server device acquires a request from the user that specifies a part of the usage right entitled to the user, and generates a license ticket corresponding to the request, and sends the license ticket to the terminal device.

30. A program used for a server device in a content usage management system including a terminal device that uses a content as a digital production, and a server device that controls usage of the content in the terminal device via a transmission line, the program having a computer function as the server, the server device including:
a right information memory unit that memorizes right information related to a usage right of the content entitled to a user using the terminal device; and
a license ticket issuance unit that generates a license ticket based on a request from the user, which is right information indicating a part of the usage right entitled to the user, and send the license ticket to the terminal device.

31. A program used for a terminal device in a content usage management system including a terminal device that uses a content as a digital production, and a server device that controls usage of the content in the terminal device via a transmission line, the program having a computer function as the terminal device, the terminal device including:
a receiving unit that receives a license ticket as right information indicating a part of the usage right entitled to a user; and
a content usage control unit that controls usage of the content according to the usage right indicated on the received license ticket.
